# EUROPEAN PATENT APPLICATION

(11) **EP 1 316 705 A2**
(43) Date of publication of application: **04.06.2003**
(21) Application number: 02026479.2
(22) Date of filing: 27.11.2002
(51) Int. Cl.: F02D 41/02, F02D 41/28, B60K 31/00, F02D 41/14

(54) **Method and device for operating an engine of a motor vehicle**

(30) Priority: 28.11.2001 DE 10158480
(71) Applicant: OMG AG & Co. KG, 63457 Hanau-Wolfgang (DE)
(72) Inventor: Votsmeier, Martin Dr., 63477 Maintal (DE); Bog, Tassilo, Dr., 80469 München (DE); Lindner, Dieter, Dr., 63457 Hanau (DE); Gieshoff, Jürgen, Dr., 63599 Biebergemünd (DE); Lox, Egbert, Dr., 6355 Hochwaldhausen (DE); Kreuzer, Thomas, Dr., 61184 Karben (DE)
(74) Representative: VOSSIUS & PARTNER

(57) **Abstract**

The present invention is directed to a method and device for operating an engine (1) of a motor vehicle. Firstly, driving condition parameters of the engine (1) and/or the motor vehicle are captured over a predetermined period of time. After that the probabilities of parameters for the future operation of the engine (1) in relation to the captured driving condition parameters are ascertained. Finally, operating parameters of the engine (1) are adjusted in relation to the ascertained probability values for the parameters.

## Description

The present invention relates to a method and device for operating an engine of a motor vehicle.

Such motor vehicles are passenger cars and trucks and have Otto engines or diesel engines.

In order to optimize the efficiency and in particular the fuel consumption, control systems for such engines are in use by means of which the operation of the engines is controlled in an appropriate manner. In particular, such engine systems exhibit exhaust gas treatment systems by means of which a cleaning step of the exhaust gas of the engines is carried out to reduce the emissions of these engines.

Such exhaust gas treatment systems make use of catalytic treatment of the exhaust gases by contacting them with an exhaust gas catalyst in order to convert the hazardous exhaust gas components into harmless compounds. An example for such exhaust gas catalysts are so-called three-way catalysts by means of which most part of the emission of the exhaust gas of engines, in particular carbon monoxide (CO), non-burned hydrocarbons (HC) and nitrogen oxides (NOₓ) can be removed simultaneously.

Such three-way catalysts are especially used for the exhaust emission control of Otto engines which are operated stoichiometrically. Stoichiometric operation is defined by a value of the normalised air/fuel ratio λ=1. The normalised air/fuel ratio λ is the actual air/fuel ratio divided by the air/fuel ratio for stoichiometric conditions.

In modern motor vehicles, also so-called lean burn engines are used to reduce the fuel consumption. Said engines are diesel engines or also Otto engines which are operated with lean air/fuel mixtures. Contrary to engines operated at stoichiometry, even greater problems occur during cleaning the exhaust gas of such lean burn engines. During most of their operation time, these engines operate with normalised air/fuel ratios λ greater than 1.3. Their exhaust gas contains about 3 to 15 vol.-% oxygen.

Thus, there are highly oxidizing conditions in the exhaust gas of lean burn engines. On this condition, nitrogen oxides in the exhaust gas can no longer be easily converted into harmless nitrogen.

In order to solve this problem, so-called nitrogen oxides storage catalysts have been developed as further exhaust gas treatment systems which oxidize the nitrogen oxides to nitrogen dioxide under lean exhaust conditions and store it in form of nitrates. After having reached the storage capacity of the catalyst, it is regenerated. This is done by enriching the exhaust gas and, if necessary, by increasing the exhaust gas temperature. Thus, the stored nitrates are decomposed and supplied into the exhaust gas stream as nitrogen oxides. The released nitrogen oxides are then reduced to nitrogen in the storage catalyst by oxidation of the reductive components (hydrocarbons, carbon monoxide and hydrogen) contained in the rich exhaust gas. Thus, the storage catalyst regains its original storage capacity. Such storage cycle approximately takes 60 to 100 seconds, wherein the regeneration takes about 0.5 to 20 seconds. The succession of the storage and regeneration cycles form further operating parameters for operating the engines.

The content of sulfur oxides in the exhaust gas represents a substantial obstacle to the use of nitrogen oxides storage catalysts since they, too, are oxidized in the storage catalyst under lean exhaust gas conditions and react with the storage components to form thermally very stable sulphates which cannot be destroyed during the normal regeneration of the storage catalyst. Thus, the storage capacity of the storage catalyst decreases with increasing life as the storage components are blocked by sulphates.

In order to decrease such contaminations of nitrogen oxides storage catalysts, a sulfur trap is arranged before the nitrogen oxides storage catalyst in the exhaust gas stream of the engine, as is, for instance, described in EP 0 625 633 Al. This combination of sulfur trap and nitrogen oxides storage catalyst is operated such that under lean exhaust gas conditions, sulfur oxides are stored in the sulfur trap and the nitrogen oxides in the nitrogen oxide storage catalyst. By periodically changing the exhaust gas conditions from lean to rich, the sulphates stored in the sulfur trap are decomposed to sulfur dioxide and the nitrates stored in the nitrogen oxides storage catalyst are decomposed to nitrogen dioxide.

Alternatively, for the purpose of sulfur removal from the sulfur trap, provision can be made for increasing the exhaust gas temperature to values which are above the limiting temperature of the storage catalyst for storing of nitrogen oxides. The succession of the sulfur removal processes is a further operating parameter for the operation of engines in motor vehicles. The dependence on time of the operating parameters of the control of such engines and their exhaust treatment systems essentially determines the fuel consumption and the exhaust emission of these vehicles.

An example for this is the sulfur removal from nitrogen oxides storage catalysts. While removing sulfur, substantial amounts of sulfur dioxide are emitted for a short period of time. Such a removal of sulfur is preferably carried out during full load operation, i.e. in particular during motorway drives since in this situation, the increased temperature of the catalyst system necessary for the removal of sulfur can be achieved with minimal energy use.

Further examples for this are the operation of three-way catalysts in Otto engines or the regeneration of diesel soot particulate filters which have to be regenerated in predetermined intervals.

The invention is based on the problem of optimizing operating parameters relevant to the operation of engines in motor vehicles as to time in order to achieve optimal efficiency of the exhaust gas treatment system and optimal fuel consumption at the same time.

The features of claims 1 and 14 are to provide the solution to this problem. Advantageous embodiments and suitable further embodiments of the invention are described in the subclaims.

The method for operating the engine of a motor vehicle according to the invention exhibits the following steps. Firstly, the driving condition parameters of the engine and/or the vehicle are collected over a predetermined period of time. Further, the probabilities of parameters for the future operation of the engine are determined dependent on the collected driving condition parameters. Finally, the operation parameters of the engine are determined dependent on the probability values of the parameters.

Thus, the underlying idea of the invention is to collect the driving conditions of the motor vehicle and the engine over a longer period of time. Thus, especially the driver's driving habits are identified, i.e. whether regularly the same trips with certain routes, speeds or acceleration habits are made. Preferably, navigation signals are read in by external navigator systems such as GPS systems to additionally determine the geographical position of the motor vehicle. Furthermore, control signals of external computer and control units, especially traffic lights or other kinds of traffic control systems can be ascertained as driving condition parameters.

According to the invention, the thus ascertained driving habit is used in the computer unit to calculate probabilities of certain parameters, wherein operation parameters of the engine are adjusted in relation thereto to optimize the fuel consumption and emission.

This means that by the probability calculations, information is gathered about the future performance of the motor vehicle, and the operation parameters are accordingly adjusted thereto. Via a correspondingly comprehensive and exact analysis of the current performance, the dependence on time of the operating parameters can be optimized with high reliability by means of appropriate evaluation systems such as fuzzy logic systems or neuronal networks.

A first example for such optimization is the sulfur removal process in nitrogen oxides storage catalysts. According to the invention, the removal of sulfur is not carried out within fixed predetermined intervals. Rather, the moments of the sulfur removal form operation parameters which are carried out in relation to the probability calculations for the relevant parameters conducted in the computer unit. In this case, the parameters are made up of the speed and acceleration profiles as well as preferably of the geographical positions of the motor vehicles. On the basis of the evaluation of the driving condition parameters corresponding to the parameters, it can for example be found out whether the motor vehicle is regularly used for motorway drives. With this information, the probabilities for the time intervals in which future motorway drives take place are calculated in the computer unit. On the basis of these parameters, the time for the removal of sulfur of the nitrogen oxide storage catalyst is timed such as to take place during the intervals of the expected future motorway travels.

Thus, the removal of sulfur from the nitrogen oxides storage catalyst is carried out with high probability while driving on motorways and not in the town traffic. Therefore, the temperature of the catalyst system necessary for removing sulfur is achieved with minimal use of energy.

A further example of the present invention is the optimized operation of three-way catalysts. By means of the device according to the invention, the control of the normalised air/fuel ratio λ of the three-way catalyst can be optimized.

A further example of the present invention is the optimized operation of diesel exhaust particulate filters which are especially used for removing particulates in exhaust gas of diesel engines. Such diesel exhaust particulate filters have to be regenerated at certain time intervals. By the device according to the invention, the intervals are selected such, that with high probability, the regeneration of the diesel exhaust particulate filters can be carried out during full load operation wherein already high temperatures of the diesel exhaust particulate filter prevail so that it can be regenerated with low use of energy.

The invention is described by means of the drawing as follows:

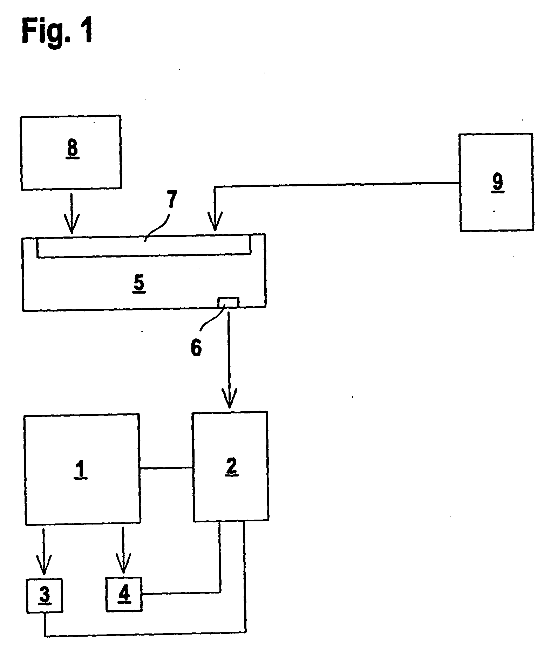

- Fig. 1:: Block diagram of an example of the device according to the invention for controlling the operation of a motor vehicle's engine.

Figure 1 schematically shows an engine 1 of a motor vehicle being controlled by a control 2. The engine 1 is a lean burn Otto engine, i.e. the engine 1 is operated at normalised air/fuel ratios λ > 1, preferably, e.g. at λ = 1.3. An exhaust gas treatment system is assigned the engine 1 which serves the cleaning of the exhaust gas of the engine 1. The exhaust treatment system comprises a three-way catalyst 3 and a nitrogen oxides storage catalyst 4. The operation of the exhaust treatment system, too, is controlled via the control 2.

A computer unit 5 which displays a micro processor system not shown in Figure 1 is arranged before the control 2 of the engine 1. The computer unit 5 controls the control 2 of the engine 1 via output signals, which are inputted in the control 2 via an output 6 of the computer unit 5.

At the input side, the computer unit 5 is provided with an interface unit 7 for reading in signals into the micro processor system. These signals are both internal signals, generated within the motor vehicle and external signals, generated outside the motor vehicle, the signals being evaluated as driving condition parameters in the computer unit 5.

The internal signals are generated or collected in an on-board computer 8 or the like in the motor vehicle and then read in into the computer unit 5. These internal signals are particularly determined by the current speed and the acceleration of the vehicle. Further, the routes covered by the motor vehicle in certain intervals of time are read in into the computer unit 5 as internal signals.

In the present case, the external signals are formed by navigation signals which are read in into the computer unit 5 by a navigator system 9. The navigator system 9 is particularly a GPS system, the control signals forming the current geographical position of the vehicle.

Alternatively or in addition, the external signals can be control signals which are read in into the computer unit 5 by external computer and/or control units. Such external units may be traffic control systems, on-board computers 8 of other vehicles or traffic lights. The control signals transmitted by these units via suitable transmitter/receiver systems contain especially advantageously information about the current volume of traffic and generally serve the control 2 of the traffic flow.

In the computer unit 5, the driving condition parameters are continuously registered whereby the performance of the motor vehicle is completely gathered over a defined period of time. These driving condition parameters provide input quantities for the calculation of probabilities of parameters for the future performance of the vehicle.

Preferably, the probability calculation of the parameters is carried out via a fuzzy logic system which is implemented in the computer unit 5. As an alternative thereto, a neuronal network can be provided. The parameters are in particular made up of route, speed and/or acceleration profiles.

By the fuzzy logic system, it is particularly registered whether certain routes are regularly used by the motor vehicle with certain speed and/or acceleration profiles. In particular, on the basis of the input quantities of the fuzzy logic system, it is found out at which time of the day and on which days of the week the motor vehicle is driven particularly often at low speed in town traffic or at high speed at motorways. The thus formed input quantities typically exhibiting a certain fuzziness are evaluated in a known manner with a system of fuzzy logic rules so that as output quantities the probabilities of the parameters for the future performance are obtained.

In the computer unit 5, the output signals with which the control 2 of the engine 1 is controlled are derived from these parameters. The output signals are generated such that the operating parameters of the engine 1, in particular the operating parameters of the exhaust treatment system are predetermined dependent on time according to the expected performance of the motor vehicle such that the fuel consumption and/or the exhaust emission of the motor vehicle is minimized.

As regards the exhaust treatment system according to Figure 1, examples for such operating parameters are the moments of regeneration and of the removal of sulfur from the nitrogen oxide storage catalyst 4.

The removal of sulfur from a nitrogen oxide storage catalyst 4 is preferably carried out during a motorway trip of the motor vehicle since then the removal of sulfur can be executed with minimal use of energy compared to the higher temperature of the catalyst system during town traffic. In the computer unit 5, it is, i.a., especially determined by means of the probability calculations of the parameters on the basis of predetermined probabilities when a vehicle is expected to be used for motorway trips. Via the output signal, a due removal of sulfur from the nitrogen oxide storage catalyst is delayed until with high probability the next motorway trip starts.

## Claims

1. A method for operating an engine of a motor vehicle, **characterized by** the following steps:
- capturing vehicle condition parameters of the engine (1) and/or the motor vehicle over a predetermined period of time,
- determining probabilities of parameters for the future operation of the engine (1) dependent on the determined driving condition parameters,
- adjusting operating parameters of the engine (1) according to the determined probability values for the parameters.

2. The method according to claim 1,
**characterized in that**
the distances of routes covered by the motor vehicle and/or the respective speed and/or acceleration profiles are determined as driving condition parameters.

3. The method according to any one of claims 1 or 2,
**characterized in that**
navigation signals are read in as driving condition parameters by external navigator systems (9).

4. The method according to any one of claims 1 to 3,
**characterized in that**
control signals are read in as driving condition parameters by external computer and/or control units.

5. The method according to claim 4
**characterized in that**
the computer and/or control units are traffic control systems, traffic lights or electronic navigators (8) of other motor vehicles.

6. The method according to any one of claims 1 to 5,
**characterized in that**
the probabilities of the parameters describe the performance to be expected of the motor vehicle.

7. The method according to claim 6,
**characterized in that**
the route, speed and/or acceleration profiles to be expected constitute the parameters.

8. The method according to any one of claims 1 to 7,
**characterized in that**
parameters of the control (2) of the engine (1) are adjusted as operating parameters.

9. The method according to any one of claims 1 to 8,
**characterized in that**
parameters for influencing exhaust treatment systems are adjusted as operating parameters.

10. The method according to claim 9,
**characterized in that**
a diesel exhaust particulate filter is used as the exhaust treatment system, the moments of the regeneration of the diesel exhaust particulate filter being adjusted as parameters.

11. The method according to claim 9,
**characterized in that**
a three-way catalyst (3) is used as an exhaust treatment system, the air ratio of the three-way catalyst (3) being controlled in relation to the parameters.

12. The method according to claim 9,
**characterized in that**
a nitrogen oxide storage catalyst (4) is provided as exhaust treatment system, which is regenerated in predetermined intervals in relation to the parameters.

13. The method according to claim 12,
**characterized in that**
sulfur is removed from the nitrogen oxide storage catalyst (4) dependent on the parameters in predetermined intervals.

14. The method for operating an engine of a motor vehicle, in particular for carrying out the method according to any one of claims 1 to 13, **characterized by**:
- means for capturing driving condition parameters of the engine (1) and/or the motor vehicle,
- a computer unit (5) for ascertaining probabilities of parameters for the future operation of the engine (1) in relation to the vehicle condition parameters,
- means for adjusting operating parameters of the engine (1) in relation to the ascertained probability values for the parameters.

15. The method according to claim 14,
**characterized in that**
the computer unit (5) comprises an interface unit (7) for reading in internal and external signals.

16. The method according to claim 15,
**characterized in that**
the motor vehicle's current speed and acceleration profiles form the internal signals.

17. The method according to any one of claims 15 or 16,
**characterized in that**
navigation signals generated in navigator systems (9) and/or control signals generated in external computer and/or control units form the external signals.

18. The method according to any one of claims 14 to 17,
**characterized in that**
a fuzzy logic system or a neuronal network for ascertaining the parameters is integrated into the computer unit (5).

19. The method according to any one of claims 14 to 18,
**characterized in that**
in the computer unit (5), output signals are generated by means of which the control (2) of the engine (1) is effected.

20. The method according to claim 19,
**characterized in that**
the control (2) of the engine (1) has an exhaust treatment system.

21. The method according to claim 20,
**characterized in that**
the exhaust treatment system has a three-way catalyst (3).

22. The method according to any one of claims 20 or 21,
**characterized in that**
the exhaust treatment system has a nitrogen oxide storage catalyst (4).

23. The method according to any one of claims 20 to 22,
**characterized in that**
the exhaust treatment system has a diesel exhaust particulate filter.
